# EUROPEAN PATENT APPLICATION

(11) **EP 4 807 999 A1**
(43) Date of publication of application: **16.09.2026**
(21) Application number: 24899561.5
(22) Date of filing: 11.11.2024
(51) Int. Cl.: H04B 1/04

(54) **TRANSCEIVER AND BASE STATION**

(30) Priority: 05.12.2023 CN 202311659045
(71) Applicant: Huawei Technologies Co., Ltd., Shenzhen, Guangdong 518129 (CN)
(72) Inventor: LI, Kan, Shenzhen, Guangdong 518129 (CN); TANG, Haizheng, Shenzhen, Guangdong 518129 (CN); SONG, Yebo, Shenzhen, Guangdong 518129 (CN)
(74) Representative: Huawei European IPR
(86) International application number: PCT/CN2024/131194
(87) International publication number: WO 2025/118919

(57) **Abstract**

A transceiver and a base station are disclosed, relating to the field of wireless communication technologies. The transceiver includes a transmitter, a transmit filter, a receive filter, a receiver, and a combiner. The transmitter is configured to generate a first multi- band radio frequency signal, and to perform power amplification on the first multi-band radio frequency signal. The transmit filter is configured to filter the power-amplified first multi-band radio frequency signal. The receive filter is configured to filter a second multi-band radio frequency signal from an antenna. The receiver is configured to amplify the filtered second multi-band radio frequency signal, and to obtain at least two channels of received signals based on the amplified second multi-band radio frequency signal. The combiner is configured to send the first multi-band radio frequency signal to the antenna, and to send the second multi-band radio frequency signal to the receive filter. The transceiver has a simple structure and low costs.

## Description

This application claims priority to Chinese Patent Application No. 202311659045.5, filed on December 5, 2023 and entitled "TRANSCEIVER AND BASE STATION", which is incorporated herein by reference in its entirety.

### TECHNICAL FIELD

This application relates to the field of wireless communication technologies, and in particular, to a transceiver and a base station.

### BACKGROUND

In wireless communication systems, a transceiver is mainly configured to send and receive signals in a communication device such as a base station.

In related technologies, a transceiver includes a duplexer, at least one transmitter, and at least one receiver. The duplexer has one first port and a plurality of second ports. The first port of the duplexer is connected to an antenna, and the first port of the duplexer is connected to each of the second ports. Each second port corresponds to one frequency band and allows signals in the corresponding frequency band to pass through. The at least one transmitter and the at least one receiver are each connected to a second port of the duplexer.

A large quantity of transmitters and receivers connected to the duplexer lead to a more complex structure and a larger volume of the duplexer, resulting in a highly complex overall structure of the transceiver, a large volume, and high costs.

### SUMMARY

This application provides a transceiver and a base station. The transceiver has a simple structure, a small volume, and low costs.

According to a first aspect, this application provides a transceiver. The transceiver includes a transmitter, a transmit filter, a receive filter, a receiver, and a combiner. The transmitter is configured to generate a first multi-band radio frequency signal based on at least two channels of transmit signals, and to perform power amplification on the first multi-band radio frequency signal, where the first multi-band radio frequency signal includes at least two first single-band radio frequency signals. The transmit filter is configured to filter the power-amplified first multi-band radio frequency signal. The receive filter is configured to filter a second multi-band radio frequency signal from an antenna, where the second multi-band radio frequency signal includes at least two channels of second single-band radio frequency signals. The receiver is configured to amplify the filtered second multi-band radio frequency signal, and to obtain at least two channels of received signals based on the amplified second multi-band radio frequency signal. The combiner is connected to both the transmit filter and the receive filter; and the combiner is configured to send the first multi-band radio frequency signal from the transmit filter to the antenna, and to send the second multi-band radio frequency signal from the antenna to the receive filter.

In this embodiment of this application, a duplexer in a related technology is split into three parts: the transmit filter, the receive filter, and the combiner. For the transmit filter, because a frequency spacing between frequency bands corresponding to the at least two first single-band radio frequency signals is large and there is no frequency band used to transmit the second single-band radio frequency signal, the transmit filter does not need to be specially designed to improve isolation between filter channels corresponding to different frequency bands. This helps reduce structural complexity of the transmit filter. Similarly, for the receive filter, because a frequency spacing between frequency bands corresponding to at least two second single-band radio frequency signals is large and there is no frequency band used to transmit the first single-band radio frequency signal, the receive filter does not need to be specially designed to improve isolation between filter channels corresponding to different frequency bands. This helps reduce structural complexity of the receive filter. In addition, because a filter function is mainly implemented by the transmit filter and the receive filter, the combiner only needs to implement combination of the second multi-band radio frequency signal in a receiving direction and the first multi-band radio frequency signal in a sending direction, to be connected to the antenna, and a transmit filter channel and a receive filter channel in the combiner do not need to be highly isolated. This can reduce structural complexity of the combiner.

In conclusion, in the transceiver, structures of the transmit filter, the receive filter, and the combiner are simple, and implementation complexity is low. Therefore, this helps reduce structural complexity of the transceiver, reduce a volume, and reduce costs.

In a possible implementation, the transceiver is an AAU, the transceiver further includes an antenna assembly, the antenna assembly includes the antenna and an enclosure frame, and the antenna and the combiner are both located in the enclosure frame and connected to the enclosure frame. Because the combiner is a passive component, the combiner is disposed in the antenna assembly. This has a small impact on manufacturing and maintenance costs of the antenna assembly and is easy to implement. In addition, a volume of a transceiver assembly may be further reduced.

In another possible implementation, the transceiver is an RRU; the transceiver does not include the antenna; the transmitter, the transmit filter, the receive filter, the receiver, and the combiner are all located in a housing of the transceiver; and the combiner is connected to an external antenna via a feeder.

Optionally, the combiner includes the receive filter channel and the transmit filter channel, and isolation between the receive filter channel and the transmit filter channel is greater than or equal to 40 dB and less than 100 dB. The isolation between the receive filter channel and the transmit filter channel in the combiner is low, and the low isolation has a low requirement on structural complexity of the combiner. Therefore, this helps reduce structural complexity of the combiner and reduce costs.

In a possible implementation, the transceiver further includes a circuit board, the circuit board includes a first area and a second area arranged side by side, the transmitter and the transmit filter are both located in the first area, and the receiver and the receive filter are both located in the second area.

By arranging the transmitter and the receiver in different areas of the circuit board, the distance between the transmit filter and the receive filter can be increased. In this way, the transmit filter and the receive filter may be isolated using a spatial distance. This helps reduce the requirement on isolation performance between the transmit filter and the receive filter, and reduce the volumes and weights of the transmit filter and the receive filter.

Optionally, the transmit filter includes a first frequency splitting module, at least two first filtering modules, and a first frequency combining module, the first frequency splitting module is configured to split the power-amplified first multi-band radio frequency signal into the at least two first single-band radio frequency signals by a frequency band, the at least two first filtering modules are respectively configured to filter the at least two first single-band radio frequency signals, and the first frequency combining module is configured to combine the at least two filtered first single-band radio frequency signals output by the at least two first filtering modules into one path to obtain the filtered first multi-band radio frequency signal.

Optionally, the receive filter includes a second frequency splitting module, at least two second filtering modules, and a second frequency combining module, the second frequency splitting module is configured to split the second multi-band radio frequency signal into the at least two second single-band radio frequency signals by a frequency band, the at least two second filtering modules are respectively configured to filter the at least two second single-band radio frequency signals, and the second frequency combining module is configured to combine the at least two filtered second single-band radio frequency signals output by the at least two second filtering modules into one path to obtain the filtered second multi-band radio frequency signal.

Optionally, the transmitter includes a first intermediate frequency conversion unit, a first radio frequency conversion unit, and a first amplification unit that are sequentially connected, the first intermediate frequency conversion unit is configured to convert the at least two channels of transmit signals into at least two channels of first intermediate frequency signals, the first radio frequency conversion unit is configured to convert the at least two channels of first intermediate frequency signals into the first multi-band radio frequency signal, and the first amplification unit is configured to amplify the first multi-band radio frequency signal to obtain the power-amplified first multi-band radio frequency signal.

Optionally, the receiver includes a second amplification unit, a second radio frequency conversion unit, and a second intermediate frequency conversion unit that are sequentially connected, the second amplification unit is configured to amplify the filtered second multi-band radio frequency signal, the second radio frequency conversion unit is configured to perform down-conversion and frequency splitting on the amplified second multi-band radio frequency signal to obtain at least two channels of second intermediate frequency signals, and the second intermediate frequency conversion unit is configured to convert the at least two channels of second intermediate frequency signals into the at least two channels of received signals.

Optionally, a frequency band corresponding to the first single-band radio frequency signal is selected from the following frequency bands: 1800 M frequency band, 2100 M frequency band, and 2600 M frequency band; and a frequency band corresponding to the second single-band radio frequency signal is selected from the following frequency bands: 1800 M frequency band, 2100 M frequency band, and 2600 M frequency band.

According to a second aspect, this application provides a base station. The base station includes a baseband unit (baseband unit, BBU) and any transceiver provided in the first aspect, and the BBU is connected to the transceiver.

### BRIEF DESCRIPTION OF DRAWINGS

FIG. 1 is a block diagram of a structure of a transceiver according to an embodiment of this application;
FIG. 2 is a diagram of a frequency range of a transmit sub-band corresponding to a first multi-band radio frequency signal and a frequency range of a receive sub-band corresponding to a second multi-band radio frequency signal according to an embodiment of this application;
FIG. 3 is a diagram of a structure of a transceiver according to an embodiment of this application;
FIG. 4 is a diagram of a structure of another transceiver according to an embodiment of this application;
FIG. 5 is a diagram of a structure of still another transceiver according to an embodiment of this application;
FIG. 6 is a diagram of a structure of yet another transceiver according to an embodiment of this application;
FIG. 7 is a diagram of a structure of still yet another transceiver according to an embodiment of this application;
FIG. 8A and FIG. 8B are a diagram of comparison between a combiner provided in embodiments of this application and a duplexer in a related technology; and
FIG. 9 is a diagram of a circuit structure of a transceiver according to an embodiment of this application.

### Reference numerals:

1: transceiver; 1a: antenna assembly; 1b: transceiver assembly;
11: transmitter;
111: first intermediate frequency conversion unit; 112: first radio frequency conversion unit; 113: first amplification unit;
113a: radio frequency adjustable gain amplifier; 113b: power amplifier;
12: receiver;
121: second amplification unit; 122: second radio frequency conversion unit; 123: second intermediate frequency conversion unit;
121a: low noise amplifier; 121b: radio frequency adjustable gain amplifier; 121c: radio frequency filter;
21: transmit filter; 22: receive filter; 23: combiner;
30: housing; 31: antenna; 32: enclosure frame;
33: circuit board; 33a: first area; 33b: second area; and
4: jumper.

### DESCRIPTION OF EMBODIMENTS

To make objectives, technical solutions, and advantages of this application clearer, the following further describes implementations of this application in detail with reference to accompanying drawings.

In embodiments of this application, a plurality of discrete components are used to replace a duplexer in a transceiver, to provide a transceiver with a simple structure, a small volume, and low costs.

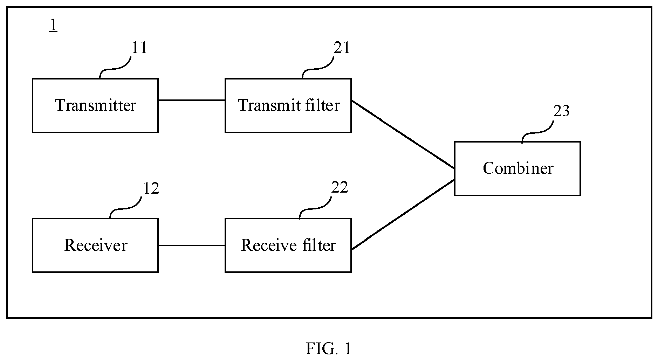

FIG. 1 is a block diagram of a structure of a transceiver according to an embodiment of this application. As shown in FIG. 1, the transceiver 1 includes a transmitter 11, a transmit filter 21, a receive filter 22, a receiver 12, and a combiner 23. The transmitter 11 is configured to generate a first multi-band radio frequency signal based on at least two channels of transmit signals, and to perform power amplification on the first multi-band radio frequency signal, where the first multi-band radio frequency signal includes at least two first single-band radio frequency signals. The transmit filter 21 is configured to filter the power-amplified first multi-band radio frequency signal. The receive filter 22 is configured to filter a second multi-band radio frequency signal from an antenna, where the second multi-band radio frequency signal includes at least two channels of second single-band radio frequency signals. The receiver 12 is configured to amplify the filtered second multi-band radio frequency signal, and to obtain at least two channels of received signals based on the amplified second multi-band radio frequency signal. The combiner 23 is connected to both the transmit filter 21 and the receive filter 22; and the combiner 23 is configured to send the first multi-band radio frequency signal from the transmit filter 21 to the antenna, and to send the second multi-band radio frequency signal from the antenna to the receive filter 22.

In this embodiment of this application, a duplexer in a related technology is split into three parts: the transmit filter 21, the receive filter 22, and the combiner 23. For the transmit filter 21, because a frequency spacing between frequency bands corresponding to the at least two first single-band radio frequency signals is large and there is no frequency band used to transmit the second single-band radio frequency signal, the transmit filter 21 does not need to be specially designed to improve isolation between filter channels corresponding to different frequency bands. This helps reduce structural complexity of the transmit filter. Similarly, for the receive filter 22, because a frequency spacing between frequency bands corresponding to at least two second single-band radio frequency signals is large and there is no frequency band used to transmit the first single-band radio frequency signal, the receive filter 22 does not need to be specially designed to improve isolation between filter channels corresponding to different frequency bands. This helps reduce structural complexity of the receive filter 22. In addition, because a filter function is mainly implemented by the transmit filter 21 and the receive filter 22, the combiner 23 only needs to implement combination of the second multi-band radio frequency signal in a receiving direction and the first multi-band radio frequency signal in a sending direction, to be connected to the antenna, and a transmit filter channel and a receive filter channel in the combiner 23 do not need to be highly isolated. This can reduce structural complexity of the combiner.

In conclusion, in the transceiver 1, structures of the transmit filter 21, the receive filter 22, and the combiner 23 are simple, and implementation complexity is low. Therefore, this helps reduce structural complexity of the transceiver 1 and reduce costs.

In this embodiment of this application, the frequency bands (also referred to as bands (band)) corresponding to the first single-band radio frequency signal and the second single-band radio frequency signal may be frequency bands that are above 1 GHz and below 3 GHz in a frequency division duplexing (frequency division duplexing, FDD) mode and that are specified in a 3GPP protocol.

Optionally, the frequency band corresponding to the first single-band radio frequency signal is selected from the following frequency bands: 1800 M frequency band, 2100 M frequency band, and 2600 M frequency band; and the frequency band corresponding to the second single-band radio frequency signal is selected from the following frequency bands: 1800 M frequency band, 2100 M frequency band, and 2600 M frequency band. Each frequency band includes a transmit sub-band and a receive sub-band. The transmit sub-band is a frequency range in which the first single-band radio frequency signal is located, and the receive sub-band is a frequency range in which the second single-band radio frequency signal is located.

For example, the first multi-band radio frequency signal includes two first single-band radio frequency signals, and frequency bands corresponding to the two first single-band radio frequency signals are 1800 M frequency band and 2100 M frequency band, respectively; and the second multi-band radio frequency signal includes two second single-band radio frequency signals, and frequency bands corresponding to the two second single-band radio frequency signals are 1800 M frequency band and 2100 M frequency band, respectively.

For another example, the first multi-band radio frequency signal includes three first single-band radio frequency signals, and frequency bands corresponding to the three first single-band radio frequency signals are 1800 M frequency band, 2100 M frequency band, and 2600 M frequency band, respectively; and the second multi-band radio frequency signal includes three second single-band radio frequency signals, and frequency bands corresponding to the three second single-band radio frequency signals are 1800 M frequency band, 2100 M frequency band, and 2600 M frequency band, respectively.

It should be noted that, in this embodiment of this application, a quantity of frequency bands and the frequency range that correspond to the first multi-band radio frequency signal are not limited, and a quantity of frequency bands and the frequency range that correspond to the second multi-band radio frequency signal are not limited either. The quantities of frequency bands and the frequency ranges may be set based on an actual requirement of a communication system.

The following uses an example in which the first multi-band radio frequency signal includes two first single-band radio frequency signals and the second multi-band radio frequency signal includes two second single-band radio frequency signals for description.

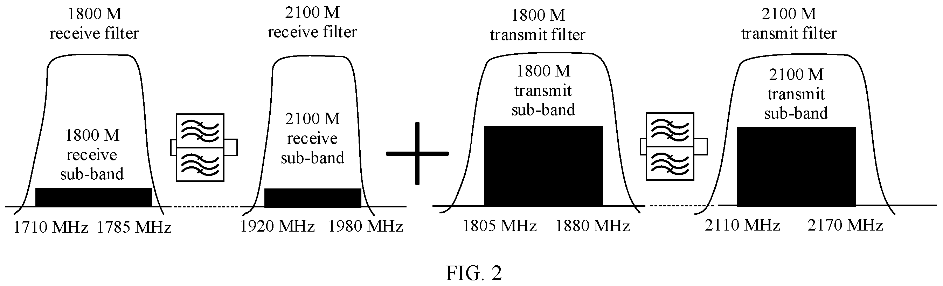

FIG. 2 is a diagram of a frequency range of a transmit sub-band corresponding to a first multi-band radio frequency signal and a frequency range of a receive sub-band corresponding to a second multi-band radio frequency signal according to an embodiment of this application. As shown in FIG. 2, two frequency bands corresponding to each of the first multi-band radio frequency signal and the second multi-band radio frequency signal are 1800 M frequency band and 2100 M frequency band. In the 1800 M frequency band, the frequency range of the transmit sub-band is 1805 MHz to 1880 MHz, and the frequency range of the receive sub-band is 1710 MHz to 1785 MHz. In the 2100 M frequency band, the frequency range of the transmit sub-band is 2110 MHz to 2170 MHz, and the frequency range of the receive sub-band is 1920 MHz to 1980 MHz.

It can be learned that in each frequency band, a spacing between a transmit sub-band and a receive sub-band is small in frequency domain; and in two adjacent frequency bands, a spacing between a transmit sub-band of one frequency band and a receive sub-band of the other frequency band may also be small in frequency domain. In addition, in an FDD mode, a receive signal and a transmit signal coexist, a power of the receive signal is low, and a power of the transmit signal is high. Therefore, the transmit signal easily causes interference to the receive signal. Therefore, in a quadruplexer, filter channels corresponding to a receive sub-band and a transmit sub-band that are adjacent in frequency domain need to be highly isolated. As a result, the quadruplexer has a large volume, a large weight, and high costs.

However, in the two adjacent frequency bands, a spacing between the transmit sub-band of the one frequency band and a transmit sub-band of the other frequency band is large (the transmit sub-band of the one frequency band and the transmit sub-band of the other frequency band are spaced apart by at least one receive sub-band) in frequency domain, and a difference between powers of signals transmitted in filter channels corresponding to the two transmit sub-bands is small. Therefore, for a transmit filter in this embodiment of this application, interference between the signals transmitted in the filter channels corresponding to the transmit sub-bands that are adjacent in frequency domain is small, and the filter channels corresponding to the two transmit sub-bands that are adjacent in frequency domain do not need to be highly isolated. This helps simplify a structure of the transmit filter, and reduce manufacturing costs.

Similarly, in the two adjacent frequency bands, a receive sub-band of the one frequency band and the receive sub-band of the other frequency band are large (the receive sub-band of the one frequency band and the receive sub-band of the other frequency band are spaced apart by at least one transmit sub-band) in frequency domain, and a difference between powers of signals transmitted in filter channels corresponding to the two receive sub-bands is small. Therefore, for a receive filter in this embodiment of this application, interference between the signals transmitted in the filter channels corresponding to the receive sub-bands that are adjacent in frequency domain is small, and the filter channels corresponding to the two receive sub-bands that are adjacent in frequency domain do not need to be highly isolated. This helps simplify a structure of the receive filter, and reduce manufacturing costs.

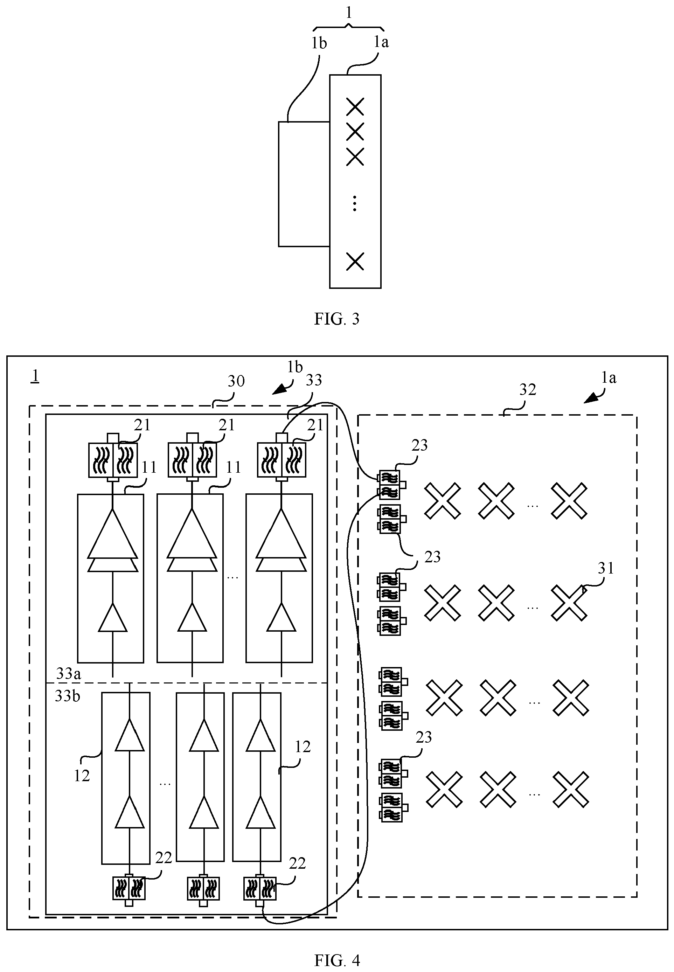

In a possible implementation, the transceiver is an active antenna unit (active antenna unit, AAU). FIG. 3 is a diagram of a structure of a transceiver according to an embodiment of this application. As shown in FIG. 3, when the transceiver is an AAU, the transceiver 1 includes two parts: an antenna assembly 1a and a transceiver assembly 1b. During implementation, the antenna assembly 1a is an entirety, and the transceiver assembly 1b is an entirety. The antenna assembly 1a is connected to the transceiver assembly 1b to obtain the AAU.

FIG. 4 is a diagram of a structure of a transceiver according to an embodiment of this disclosure, and shows detailed structures of the antenna assembly 1a and the transceiver assembly 1b in FIG. 3.

For example, as shown in FIG. 4, the antenna assembly 1a includes an antenna 31, an enclosure frame 32, and a combiner 23. The antenna 31 and the combiner 23 are both located in the enclosure frame 32 and are connected to the enclosure frame 32. In other words, in this embodiment of this application, the combiner 23 may be integrated into the antenna assembly 1a. Because the combiner 23 is a passive component, the combiner 23 is disposed in the antenna assembly 1a. This has a small impact on manufacturing and maintenance costs of the antenna assembly 1a. In addition, because the antenna assembly 1a has a large volume, and the transceiver assembly 1b is an active module and has a small volume, the combiner 23 is integrated into the antenna assembly 1a, which is conducive to simplifying a structure of the active module and easy to implement.

Optionally, the antenna 31 is a passive component, and may include a plurality of wideband transceiver arrays, where each wideband transceiver array is connected two combiners. The wideband transceiver array has antenna elements in two polarization directions (for example, +45 degrees and -45 degrees), and an antenna element in each polarization direction corresponds to one combiner. A first multi-band radio frequency signal output by the combiner is transmitted via the antenna element in the corresponding polarization direction, and a second multi-band radio frequency signal received by an antenna element in one polarization direction is output to a corresponding combiner.

The transceiver assembly 1b includes a housing 30; and a transmitter 11, a transmit filter 21, a receive filter 22, and a receiver 12 are all housed within the housing 30. The housing 30 can protect an internal component. The housing 30b is connected to an enclosure plate 30a, and the combiner 23 in the enclosure plate 30a is electrically connected to each transmit filter 21 and each receive filter 22 in the housing 30b, to obtain the AAU.

Herein, the transceiver assembly 1b includes two first connection interfaces, and the two first connection interfaces are fastened on the housing 30. One first connection interface is connected to the transmit filter 21, and the other first connection interface is connected to the receive filter 22. The antenna assembly 1a includes two second connection interfaces, and the two second connection interfaces are fastened on the enclosure frame 32. The two second connection interfaces are both connected to the combiner 23. The first connection interface is connected with the second connection interface, so that the combiner 23 in the enclosure frame 32 can be electrically connected to each transmit filter 21 and each receive filter 22 in the housing 30.

Optionally, the first connection interface and the second connection interface may be blind-mate radio frequency coaxial connectors.

For example, the enclosure frame 32 may be a flat box body, and a side wall of the housing 30 has a groove matching the enclosure frame 32, to facilitate assembly of the enclosure frame 32 and the housing 30. The enclosure frame 32 and the housing 30 may be fastened via a fastener, and the fastener includes but is not limited to a screw and the like.

It is assumed that one transmitter 11, one transmit filter 21, one receive filter 22, and one receiver 12 are one transceiver unit. In this case, the transceiver 1 may include one transceiver unit or a plurality of transceiver units. Each transceiver unit includes a receiving subunit and a transmitting subunit, each receiving subunit includes a receiver 12 and a receive filter 22 that are connected, and each transmitting subunit includes a transmitter 11 and a transmit filter 21 that are connected.

In some embodiments, as shown in FIG. 4, the transceiver further includes a circuit board 33, and each transceiver unit is disposed on the circuit board 33. The circuit board 33 is located in the housing 30.

In a possible implementation, as shown in FIG. 4, the circuit board 33 includes a first area 33a and a second area 33b arranged side by side, both the transmitter 11 and the transmit filter 21 are located in the first area 33a, and both the receiver 12 and the receive filter 22 are located in the second area 33b.

By arranging the transmit filter 21 and the receive filter 22 in different areas of the circuit board 33, the distance between the transmit filter 21 and the receive filter 22 can be increased. In this way, the transmit filter 21 and the receive filter 22 may be isolated by a spatial distance. This helps reduce the requirement on isolation performance between the transmit filter 21 and the receive filter 22, and reduce the volumes and weights of the transmit filter 21 and the receive filter 22.

When the transceiver 1 includes a plurality of transceiver units, all transmitters 11 and transmit filters 21 in the transceiver 1 are located in the first area 33a, and all receivers 12 and receive filters 22 are located in the second area 33b. That is, all transmitting subunits are located in the first area 33a, and all receiving subunits are located in the second area 33b.

In some examples, as shown in FIG. 4, all the transmit filters 21 in the transceiver 1 are located on a side that is of the first area 33a and that is away from the second area 33b, and all the transmitters 11 in the transceiver 1 are located on a side that is of the first area 33a and that is close to the second area 33b. Similarly, all the receive filters 22 in the transceiver 1 are located on a side that is of the second area 33b and that is away from the first area 33a, and all the receivers 12 in the transceiver 1 are located on a side that is of the second area 33b and that is close to the first area 33a. In this way, the distance between the transmit filter 21 and the receive filter 22 is long, and space between the transmit filter 21 and the receive filter 22 is fully utilized.

During implementation, a transmitting subunit and a receiving subunit that are arranged in an arrangement direction of the first area 33a and the second area 33b may be used as one transceiver unit, and a transmit filter 21 and a receive filter 22 in one transceiver unit are connected to one combiner 23.

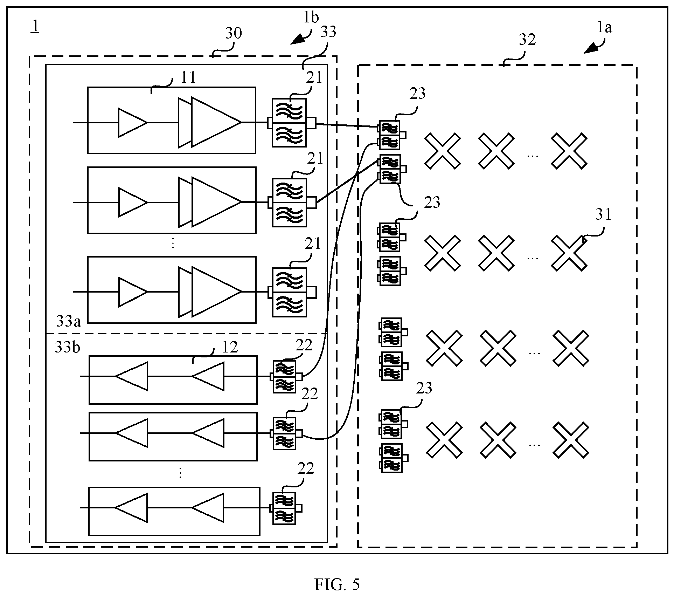

FIG. 5 is a diagram of a structure of another transceiver according to an embodiment of this application, and shows detailed structures of the antenna assembly 1a and the transceiver assembly 1b in FIG. 3. As shown in FIG. 5, when the transceiver includes a plurality of transceiver units, all transmitting subunits may be arranged in a first area 33a, and all receiving subunits may be arranged in a second area 33b. In addition, both a transmit filter 21 and a receive filter 22 are arranged along an arrangement direction of the first area 33a and the second area 33a, and are located on a same side of the first area 33a and the second area 33b. At a boundary between the first area 33a and the second area 33b, a spacing between a transmit filter 21 and a receive filter 22 that are adjacent is the smallest, and a spacing between another transmit filter 21 and any receive filter 22 is greater than the spacing between the transmit filter 21 and the receive filter 22 that are adjacent. Therefore, if interference between signals transmitted in the transmit filter 21 and the receive filter 22 that have the smallest spacing is small, and can meet a requirement of a communication system, interference between signals transmitted in the another transmit filter 21 and the any receive filter 22 can meet the requirement of the communication system. In this case, interference between any transmit filter 21 and any receive filter 22 is minimized, provided that the spacing between the transmit filter 21 and the receive filter 22 that are adjacent is greater than a specified value.

Optionally, the spacing between the transmit filter 21 and the receive filter 22 that are adjacent is greater than a spacing between any two adjacent transmit filters 21 in the first area 33a, and spacings between two adjacent transmit filters 21 in the first area 33a may be equal or unequal. In addition, the spacing between the transmit filter 21 and the receive filter 22 that are adjacent is greater than a spacing between any two adjacent receive filters 22 in the second area 33b, and spacings between two adjacent receive filters 22 in the second area 33b may be equal or unequal.

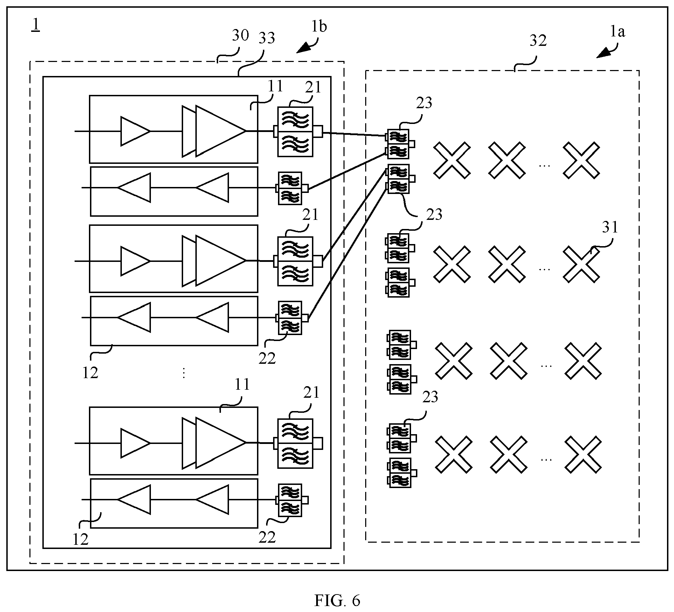

FIG. 6 is a diagram of a structure of another transceiver according to an embodiment of this application, and shows detailed structures of the antenna assembly 1a and the transceiver assembly 1b in FIG. 3. As shown in FIG. 6, when the transceiver includes a plurality of transceiver units, a plurality of transmitting subunits and a plurality of receiving subunits in the plurality of transceiver units may be alternately arranged in a first direction. In this case, it should be ensured that a spacing between a transmit filter and a receive filter in a same transceiver unit and a spacing between a transmit filter and a receive filter that are adjacent in two adjacent transceiver units are both greater than the specified value, to ensure that an interference degree between the transmit filter and receive filter that are adjacent meets system requirements.

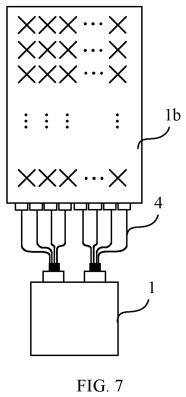

FIG. 7 is a diagram of a structure of still another transceiver according to an embodiment of this application. As shown in FIG. 7, in another possible implementation, the transceiver 1 is a radio remote unit (radio remote unit, RRU). When the transceiver is an RRU, the transceiver does not include an antenna, and includes only the transceiver assembly 1b. In addition, a combiner (not shown in the figure) is also located in a housing of the transceiver assembly.

For example, the housing of the transceiver assembly has a connection port. In this way, the connection port is connected to one end of a jumper (also referred to as a feeder) 4, and the other end of the jumper 4 is connected to the antenna, so that the transceiver 1 can be connected to the antenna through the connection port. The connection port is a multi-core connector (also referred to as a bundled port), and each connection core in the multi-core connector connects one feeder to an output end of one combiner. For example, the connection port is a 2-core connector, a 4-core connector, or an 8-core connector.

The following separately describes in detail the structures of the combiner, the receive filter, and the transmit filter in embodiments of this application.

In embodiments of this application, the combiner includes a receive filter channel and a transmit filter channel, and isolation between the receive filter channel and the transmit filter channel is greater than or equal to 30 dB and less than 100 dB.

In a related technology, isolation between a receive filter channel and a transmit filter channel in a duplexer needs to be greater than 100 dB. Compared with that in the duplexer, the isolation between the receive filter channel and the transmit filter channel in the combiner is lower, and the low isolation has a low requirement on structural complexity of the combiner. Therefore, this helps reduce structural complexity of the combiner and reduce costs.

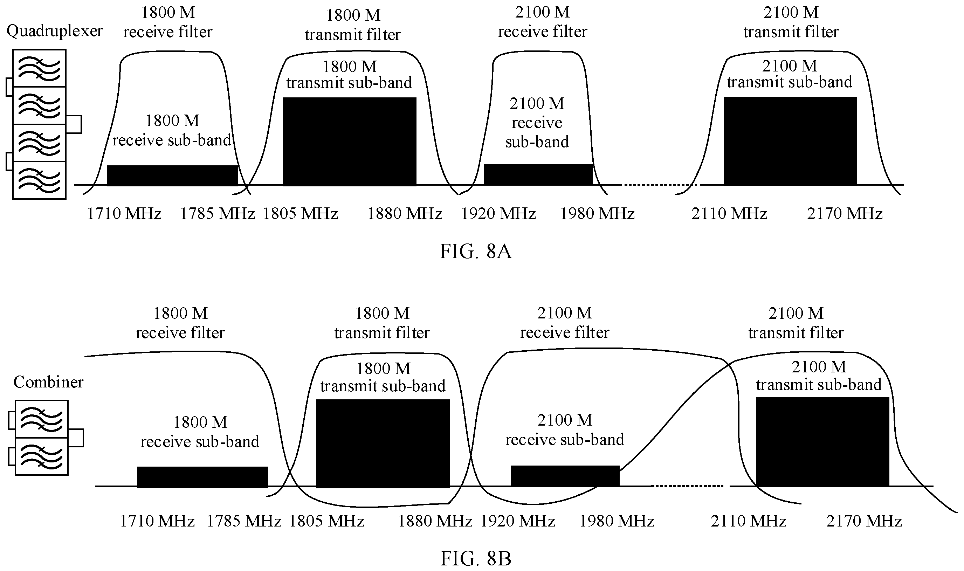

FIG. 8A and FIG. 8B are a diagram of comparison between a combiner provided in embodiments of this application and a duplexer in a related technology. As shown in FIG. 8A, in a quadruplexer, an overlapping part between a receive filter channel and a transmit filter channel that are adjacent in frequency domain is very small, and isolation between the receive filter channel and the transmit filter channel that are adjacent in frequency domain is high. For example, a right edge of a receive filter channel corresponding to a 1800 M receive sub-band basically does not overlap a left edge of a transmit filter channel corresponding to a 1800 M transmit sub-band in frequency domain, and a right edge of a receive filter channel corresponding to a 2100 M receive sub-band does not overlap a left edge of a transmit filter channel corresponding to a 2100 M transmit sub-band at all. As shown in FIG. 8B, in the combiner, edge slopes of a receive filter channel and a transmit filter channel are flat, and an overlapping part between a receive filter channel and a transmit filter channel that are adjacent in frequency domain is large. It can be learned that isolation between the receive filter channel and the transmit filter channel that are adjacent in frequency domain is low. For example, a right edge of a receive filter channel corresponding to a 1800 M receive sub-band and a left edge of a transmit filter channel corresponding to a 1800 M transmit sub-band overlap in frequency domain in a wide range, and a right edge of a receive filter channel corresponding to a 2100 M receive sub-band and a left edge of a transmit filter channel corresponding to a 2100 M transmit sub-band overlap in frequency domain in a wide range.

Optionally, the isolation between the receive filter channel and the transmit filter channel of the combiner is greater than or equal to 30 dB and less than 80 dB. A requirement of the isolation between the receive filter channel and the transmit filter channel is further reduced, so that structural complexity and costs of the combiner can be further reduced. For example, the isolation between the receive filter channel and the transmit filter channel of the combiner is greater than or equal to 40 dB and less than 80 dB. For example, the isolation between the receive filter channel and the transmit filter channel of the combiner may be 30 dB, 40 dB, 50 dB, 60 dB, or 70 dB.

For example, the combiner includes one first port and two second ports, where the first port is connected to an antenna, one second port is connected to a transmit filter, and the other second port is connected to a receive filter.

In embodiments of this application, the combiner has at least two receive filter channels, and each receive filter channel is configured to allow a second single-band radio frequency signal in a corresponding receive sub-band to pass through, and filter out a frequency band other than the corresponding receive sub-band. That is, each receive filter channel is a band-pass filter. Similarly, the combiner has at least two transmit filter channels, and each transmit filter channel is configured to allow a first single-band radio frequency signal in a corresponding transmit sub-band to pass through, and filter out a frequency band other than the corresponding transmit sub-band. That is, each transmit filter channel is a band-pass filter.

Specific structures of the transmit filter channel and the receive filter channel are not limited in embodiments of this application.

Optionally, the transmit filter 21 includes a first frequency splitting module, at least two first filtering modules, and a first frequency combining module. The first frequency splitting module has one input end and at least two output ends, and the input end of the first frequency splitting module is connected to a receiver. The first frequency splitting module is configured to split the power-amplified first multi-band radio frequency signal into at least two first single-band radio frequency signals by a frequency band. In each transmit filter 21, a quantity of first filtering modules is equal to a quantity of first single-band radio frequency signals included in the first multi-band radio frequency signal, and an input end of each first filtering module is connected to one output end of the first frequency splitting module. Each first filtering module is configured to filter one first single-band radio frequency signal. In other words, the at least two first filtering modules are respectively configured to filter the at least two first single-band radio frequency signals. The first frequency combining module has at least two input ends and one output end. The at least two input ends of the first frequency combining module are separately connected to an output end of one first filtering module. The first frequency combining module is configured to combine the at least two filtered first single-band radio frequency signals output by the at least two first filtering modules into one path to obtain the filtered first multi-band radio frequency signal, and to send the filtered first multi-band radio frequency signal to the antenna. During implementation, each first filtering module may be implemented via a resonant cavity.

In embodiments of this application, the transmit filter 21 has one input port and one output port. The input port is connected to the input end of the first frequency splitting module and is connected to a transmitter, and the output port is connected to the first frequency combining module and is connected to a second port of the combiner.

Optionally, the receive filter 22 includes a second frequency splitting module, at least two second filtering modules, and a second frequency combining module. The second frequency splitting module has one input end and at least two output ends, and the input end of the second frequency splitting module is connected to the antenna. The second frequency splitting module is configured to split the second multi-band radio frequency signal into at least two second single-band radio frequency signals by a frequency band. In each receive filter, a quantity of second filtering modules is equal to a quantity of second single-band radio frequency signals included in the second multi-band radio frequency signal, and an input end of each second filtering module is connected to one output end of the second frequency splitting module. Each second filtering module is configured to filter one second single-band radio frequency signal. In other words, the at least two second filtering modules are respectively configured to filter the at least two second single-band radio frequency signals. The second frequency combining module has at least two input ends and one output end, and the at least two input ends of the second frequency combining module are separately connected to an output end of one second filtering module. The second frequency combining module is configured to combine the at least two filtered second single-band radio frequency signals output by the at least two second filtering modules into one path to obtain the filtered second multi-band radio frequency signal; and to send the filtered second multi-band radio frequency signal to the receiver.

In embodiments of this application, the receive filter 22 includes one input port and one output port. The input port is connected to the input end of the second frequency splitting module and is connected to a second port of the combiner. The output port is connected to the second frequency combining module and is connected to the receiver.

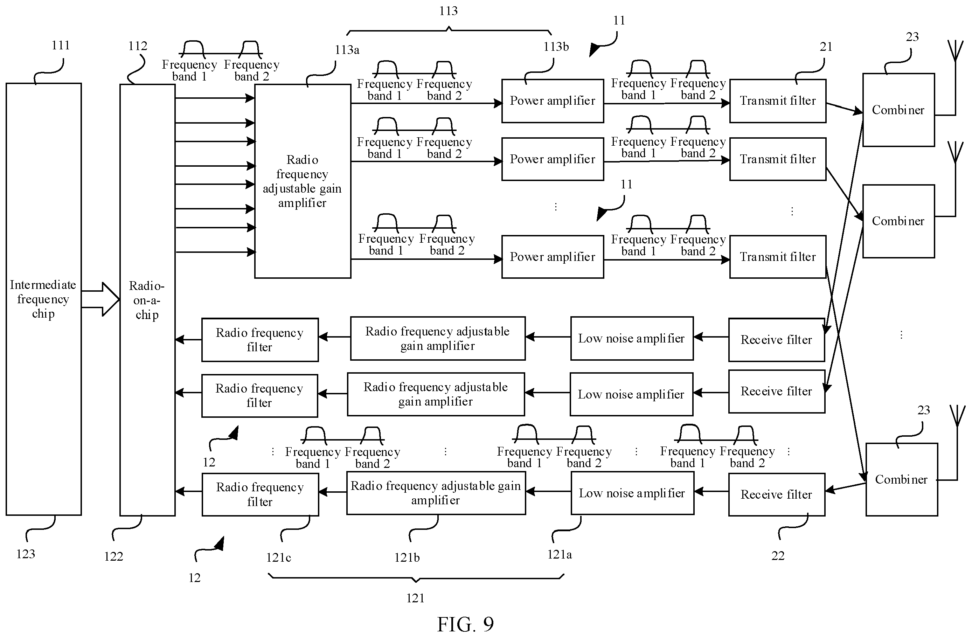

The following describes circuit structures of the transmitter and the receiver in embodiments of this application by using an example with reference to FIG. 9. As shown in FIG. 9, a transmitter 11 includes a first intermediate frequency conversion unit 111, a first radio frequency conversion unit 112, and a first amplification unit 113 that are sequentially connected. The first intermediate frequency conversion unit 111 is configured to convert at least two channels of transmit signals into at least two channels of first intermediate frequency signals. The first radio frequency conversion unit 112 is configured to convert the at least two channels of first intermediate frequency signals into at least one channel of first multi-band radio frequency signal. The first amplification unit 113 is configured to perform power amplification on the first multi-band radio frequency signal to obtain the power-amplified first multi-band radio frequency signal.

In this embodiment of this application, the transmit signal is a baseband signal, and the first intermediate frequency conversion unit 111 is configured to sample and convert the at least two channels of transmit signals to obtain the at least two channels of first intermediate frequency signals. The first radio frequency conversion unit 112 is configured to perform up-conversion on the at least two channels of first intermediate frequency signals to obtain at least two channels of first radio frequency signals. An implementation of up-conversion is not limited in embodiments of this application. For example, up-conversion may be performed on the at least two channels of first intermediate frequency signals based on a local oscillator signal.

For example, the first amplification unit 113 includes a radio frequency adjustable gain amplifier 113a and a power amplifier 113b that are sequentially connected. The radio frequency adjustable gain amplifier 113a is configured to amplify or attenuate and combine the at least two channels of first radio frequency signals to obtain the first multi-band radio frequency signal. The power amplifier 113b is configured to perform power amplification on the first multi-band radio frequency signal, so that the power-amplified first multi-band radio frequency signal reaches a specified transmit power.

Optionally, in FIG. 9, radio frequency adjustable gain amplifiers 113a in first amplification units 113 of a plurality of transmitters 11 are integrated together, to further simplify a circuit structure of a transceiver. In other embodiments, each first amplification unit 113 may alternatively use one independent radio frequency adjustable gain amplifier 113a.

A receiver 12 includes a second amplification unit 121, a second radio frequency conversion unit 122, and a second intermediate frequency conversion unit 123 that are sequentially connected. The second amplification unit 121 is configured to amplify a filtered second multi-band radio frequency signal. The second radio frequency conversion unit 122 is configured to perform down-conversion and frequency splitting on the amplified second multi-band radio frequency signal to obtain at least two channels of second intermediate frequency signals. The second intermediate frequency conversion unit 123 is configured to convert the at least two channels of second intermediate frequency signals into at least two channels of received signals.

The second amplification unit 121 includes a low noise amplifier 121a, a radio frequency adjustable gain amplifier 121b, and a radio frequency filter 121c that are sequentially connected. The low noise amplifier 121a is configured to perform low noise power amplification on the second multi-band radio frequency signal from an antenna. The radio frequency adjustable gain amplifier 121b is configured to amplify or attenuate the second multi-band radio frequency signal obtained through low noise power amplification. The radio frequency filter 121c is configured to filter out noise in the second multi-band radio frequency signal, where the noise herein refers to a signal in a frequency band other than a frequency band corresponding to the second multi-band radio frequency signal.

The second radio frequency conversion unit 122 is configured to perform down-conversion and frequency splitting on the second multi-band radio frequency signal output by the second amplification unit 121 to obtain the at least two channels of second intermediate frequency signals. The second intermediate frequency conversion unit 123 is configured to sample the second intermediate frequency signal to obtain a corresponding receive signal. Herein, the receive signal is a baseband digital signal. An implementation of down-conversion is not limited in embodiments of this application. For example, down-conversion may be performed on the second multi-band radio frequency signal based on a local oscillator signal.

As shown in FIG. 9, first radio frequency conversion units 112 in all transmitters 11 and second radio frequency conversion units 122 in all receivers 12 are integrated into a radio-on-a-chip. First intermediate frequency conversion units 111 in all the transmitters 11 and second intermediate frequency conversion units 123 in all the receivers 12 are integrated into an intermediate frequency chip. A name of the chip may be set based on an actual requirement. This is not limited in embodiments of this application.

Alternatively, in other embodiments, all the first intermediate frequency conversion units in the transmitters are independent circuits, and all the second intermediate frequency conversion units in the receivers are independent circuits.

Alternatively, in other embodiments, all the first radio frequency conversion units in the transmitters are independent circuits, and all the second radio frequency conversion units in the receivers are independent circuits.

Alternatively, in other embodiments, the first intermediate frequency conversion units and the first radio frequency conversion units in the transmitters and the second intermediate frequency conversion units and the second radio frequency conversion units in the receivers may be integrated together.

A specific circuit structure of each unit may be any structure in the related technology, provided that a corresponding function can be implemented. This is not limited in embodiments of this application.

In embodiments of this application, a quantity of transmit channels of the transceiver is equal to a quantity of transmitters in the transceiver, and a quantity of receive channels of the transceiver is equal to a quantity of receivers in the transceiver. Optionally, in the transceiver, the quantity of transmit channels may be equal to the quantity of receive channels, or the quantity of transmit channels may not be equal to the quantity of receive channels. In FIG. 3, FIG. 4, and FIG. 5, a transceiver with 8T8R (8T8R) is used as an example for illustration. However, quantities of transmit channels and receive channels of the transceiver are not limited in embodiments of this application, and may be set based on an actual requirement, for example, 4T4R, 4T8R, or 8T4R.

An embodiment of this application further provides a base station. The base station includes a BBU and any one of the foregoing transceivers, and the BBU is connected to the transceiver. The BBU is configured to generate a transmit signal, receive a receive signal sent by the transceiver, and process the receive signal.

Optionally, the BBU and the transceiver may be connected via any communication medium, for example, connected via an optical fiber or connected via a cable.

Unless otherwise defined, technical terms or scientific terms used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. "A plurality of" in embodiments of this application means two or more. "A and/or B" indicates that the following three cases exist: A, B, and A and B.

The foregoing descriptions are merely an embodiment of this application, but are not intended to limit this application. Any modification, equivalent replacement, improvement, or the like made within the spirit and principle of this application shall fall within the protection scope of this application.

## Claims

1. A transceiver, wherein the transceiver comprises a transmitter, a transmit filter, a receive filter, a receiver, and a combiner, wherein
the transmitter is configured to generate a first multi-band radio frequency signal based on at least two channels of transmit signals, and to perform power amplification on the first multi-band radio frequency signal, wherein the first multi-band radio frequency signal comprises at least two first single-band radio frequency signals;
the transmit filter is configured to filter the power-amplified first multi-band radio frequency signal;
the receive filter is configured to filter a second multi-band radio frequency signal from an antenna, wherein the second multi-band radio frequency signal comprises at least two channels of second single-band radio frequency signals;
the receiver is configured to amplify the filtered second multi-band radio frequency signal, and to obtain at least two channels of received signals based on the amplified second multi-band radio frequency signal; and
the combiner is connected to both the transmit filter and the receive filter; and the combiner is configured to send the first multi-band radio frequency signal from the transmit filter to the antenna, and to send the second multi-band radio frequency signal from the antenna to the receive filter.

2. The transceiver according to claim 1, wherein the transceiver further comprises an antenna assembly, the antenna assembly comprises the antenna and an enclosure frame, and the antenna and the combiner are both located in the enclosure frame and connected to the enclosure frame.

3. The transceiver according to claim 1 or 2, wherein the combiner comprises a receive filter channel and a transmit filter channel, and isolation between the receive filter channel and the transmit filter channel is greater than or equal to 30 dB and less than 100 dB.

4. The transceiver according to any one of claims 1 to 3, wherein the transceiver further comprises a circuit board, the circuit board comprises a first area and a second area arranged side by side, the transmitter and the transmit filter are both located in the first area, and the receiver and the receive filter are both located in the second area.

5. The transceiver according to any one of claims 1 to 4, wherein the transmit filter comprises a first frequency splitting module, at least two first filtering modules, and a first frequency combining module, the first frequency splitting module is configured to split the power-amplified first multi-band radio frequency signal into the at least two first single-band radio frequency signals by a frequency band, the at least two first filtering modules are respectively configured to filter the at least two first single-band radio frequency signals, and the first frequency combining module is configured to combine the at least two filtered first single-band radio frequency signals output by the at least two first filtering modules into one path to obtain the filtered first multi-band radio frequency signal.

6. The transceiver according to any one of claims 1 to 5, wherein the receive filter comprises a second frequency splitting module, at least two second filtering modules, and a second frequency combining module, the second frequency splitting module is configured to split the second multi-band radio frequency signal into at least two second single-band radio frequency signals by a frequency band, the at least two second filtering modules are respectively configured to filter the at least two second single-band radio frequency signals, and the second frequency combining module is configured to combine the at least two filtered second single-band radio frequency signals output by the at least two second filtering modules into one path to obtain the filtered second multi-band radio frequency signal.

7. The transceiver according to any one of claims 1 to 6, wherein the transmitter comprises a first intermediate frequency conversion unit, a first radio frequency conversion unit, and a first amplification unit that are sequentially connected, the first intermediate frequency conversion unit is configured to convert the at least two channels of transmit signals into at least two channels of first intermediate frequency signals, the first radio frequency conversion unit is configured to convert the at least two channels of first intermediate frequency signals into the first multi-band radio frequency signal, and the first amplification unit is configured to amplify the first multi-band radio frequency signal to obtain the power-amplified first multi-band radio frequency signal.

8. The transceiver according to any one of claims 1 to 7, wherein the receiver comprises a second amplification unit, a second radio frequency conversion unit, and a second intermediate frequency conversion unit that are sequentially connected, the second amplification unit is configured to amplify the filtered second multi-band radio frequency signal, the second radio frequency conversion unit is configured to perform down-conversion and frequency splitting on the amplified second multi-band radio frequency signal to obtain at least two channels of second intermediate frequency signals, and the second intermediate frequency conversion unit is configured to convert the at least two channels of second intermediate frequency signals into the at least two channels of received signals.

9. The transceiver according to any one of claims 1 to 8, wherein a frequency band corresponding to the first single-band radio frequency signal is selected from the following frequency bands: 1800 M frequency band, 2100 M frequency band, and 2600 M frequency band; and a frequency band corresponding to the second single-band radio frequency signal is selected from the following frequency bands: 1800 M frequency band, 2100 M frequency band, and 2600 M frequency band.

10. A base station, wherein the base station comprises a baseband unit and the transceiver according to any one of claims 1 to 9, and the baseband unit is connected to the transceiver.
